# EUROPÄISCHE PATENTSCHRIFT

(11) **EP 4 354 808 B1**
(45) Veröffentlichungstag und Bekanntmachung des Hinweises auf die Patenterteilung: **24.12.2025**
(21) Anmeldenummer: 23202861.3
(22) Anmeldetag: 10.10.2023
(51) Int. Cl.: H04L 12/403

(54) **GATEWAY ZUR VERBINDUNG MIT EINEM HOST-PROZESSOR UND MEHREREN SLAVES UND VERFAHREN ZUM BETREIBEN DES GATEWAYS**
GATEWAY FOR CONNECTION TO A HOST PROCESSOR AND A PLURALITY OF SLAVES AND A METHOD OF OPERATING THE GATEWAY
PASSERELLE POUR CONNECTER UN PROCESSEUR HÔTE ET UNE PLURALITÉ D'ESCLAVES ET PROCÉDÉ DE FONCTIONNEMENT DE LA PASSERELLE

(30) Priorität: 14.10.2022 DE 102022210909; 14.10.2022 DE 102022210908
(43) Veröffentlichungstag der Anmeldung: 17.04.2024
(73) Patentinhaber: Elmos Semiconductor SE, 51379 Leverkusen (DE)
(72) Erfinder: Leitner, Thomas, 44227 Dortmund (DE); Voigt, Jens, 44227 Dortmund (DE); Küttner, Michael, 44227 Dortmund (DE)
(74) Vertreter: Tautz & Schuhmacher

(56) Entgegenhaltungen:
- US-A1- 2016 373 533
- US-A1- 2017 154 001
- US-A1- 2021 400 787

## Beschreibung

Die vorliegende Offenbarung betrifft ein Gateway zur Verbindung mit einem HostProzessor und mehreren Slaves, optional eines Kraftfahrzeugs, und ein Verfahren zum Betreiben des Gateways. Ferner wird ein System zur Datenverarbeitung mit dem Gateway bereitgestellt. Zusätzlich oder alternativ wird ein Computerprogramm bereitgestellt, das Befehle umfasst, die bei der Ausführung des Programms durch einen Computer diesen veranlassen, das Verfahren zumindest teilweise auszuführen. Zusätzlich oder alternativ wird ein computerlesbares Medium bereitgestellt, das Befehle umfasst, die bei der Ausführung der Befehle durch einen Computer diesen veranlassen, das Verfahren zumindest teilweise auszuführen.

Die DE 10 2019 215 568 A1 betrifft ein Verfahren zum Betreiben eines Gateways eines Fahrzeugs, bei dem ein an ein Gateway eines Fahrzeugs angeschlossenes Steuergerät des Fahrzeugs bei jedem Kommunizieren einen Identifikator des Steuergeräts überträgt und das Gateway den von dem Steuergerät übertragenen Identifikator empfängt sowie Gateway für ein Fahrzeug, Steuergerät für ein Fahrzeug und Fahrzeug.

Die DE 11 2008 001 599 T5 betrifft ein Kommunikationssystem für ein Fahrzeug, aufweisend eine Mehrzahl von Kommunikationsgeräten für ein Fahrzeug, die in das Fahrzeug eingebaut sind und eine Datenübertragung durchführen, wobei die Kommunikationsvorrichtung für ein Fahrzeug Sendemittel zum Senden einer Empfangsbestätigung aufweist, welche einen Sender der Daten über den Empfang der Daten informieren, wenn die Daten empfangen worden sind, und wobei, wenn es an den Sender zu sendende Daten gibt, diese Daten der Empfangsbestätigung hinzugefügt werden und dem Sender zusammen mit der Empfangsbestätigung gesendet werden.

US 2021/400787 A1 betrifft ein verteiltes Steuersystem mit einer Vielzahl von Steuerungen, wobei jede Steuerung der Vielzahl von Steuerungen mit den übrigen Steuerungen der Vielzahl von Steuerungen in Verbindung steht, wobei jede Steuerung so konfiguriert ist, dass sie mindestens eine Vorrichtung steuert, wobei jede Steuerung ferner so konfiguriert ist, um: als Reaktion auf ein empfangenes Signal einen ersten Zeitgeber zu initiieren, wobei der erste Zeitgeber eine Länge aufweist, die in Bezug auf die ersten Zeitgeberlängen der verbleibenden Steuerungen der Mehrzahl von Steuerungen eindeutig ist; nach Ablauf des ersten Zeitgebers ein erstes Benachrichtigungssignal an die verbleibenden Steuerungen zu senden, das die verbleibenden Steuerungen über eine Absicht informiert, ein Befehlssignal zu senden; das Befehlssignal an die mindestens eine Vorrichtung zu senden, wobei der Controller so konfiguriert ist, dass er das Senden des Benachrichtigungssignals und des Befehlssignals abbricht, wenn das Benachrichtigungssignal zuerst von einem der verbleibenden Controller der Vielzahl von Controllern vor dem Ablauf des ersten Zeitgebers empfangen wird.

In Kraftfahrzeugen kommt der sog. DSI3 Standard zum Einsatz. Unter DSI3 kann das Distributed System Interface der 3. Generation verstanden werden. Im Standard festgelegt sind die Bustopologien, Betriebsarten und Funktionsklassen von DSI3-Bussystemen sowie die zugehörigen elektrischen und physikalischen Eigenschaften. Weiterhin definiert der Standard auch das Nachrichtenprotokoll, Nachrichtentransaktionsmodelle, Nachrichtenformate, Bitübertragungsreihenfolge und Nachrichtenfehlerprüfung.

DSI3 ist ein Satellitenschnittstellenbus der dritten Generation, der in erster Linie für die sicherheitskritische Kommunikation zwischen einer zentralen Master-Schnittstelle und mehreren Satellitenknoten, auch Slaves genannt, vorgesehen ist. Slave-Knoten können als einfache Zustandsautomaten oder als Mikroprozessor- oder DSPbasierte Steuerungen implementiert werden. Die Slaves können Rohdatensignalquellen oder vorverarbeitete Signalquellen bereitstellen. Jeder Slave kann eine einzelne Datenquelle oder mehrere Datenquellen enthalten. Slave-Knoten können auch Ausgangs- und Steuerfunktionen bereitstellen.

Das DSI3-Protokoll verwaltet die Bildung von Netzwerken, die aus einem Master-Knoten und einem oder mehreren Slave-Knoten bestehen. Ein System kann aus einem oder mehreren Master-Knoten bestehen. Die Kommunikation zwischen dem Master und den Slaves folgt einem Befehls- und Antwort-Transaktionsmodell mit einer separaten Befehls- und Antwort-Phase. Die Verbindung zwischen einem Master-Knoten und einem oder mehreren Slave-Knoten wird durch eine Bustopologie definiert. Das DSI3-Protokoll definiert Punkt-zu-Punkt-, serielle Daisy-Chain- und parallele Bustopologien.

Die Punkt-zu-Punkt-Topologie (P2P-Topologie) besteht aus einem einzigen Master-Knoten und einem einzigen Slave-Knoten. Mit anderen Worten, ein bestimmter Slave-Knoten ist nur einem bestimmten Master-Knoten zugeordnet und umgekehrt. Informationen bzw. Daten, die zwischen diesem Master-Knoten und dem zugehörigen Slave-Knoten ausgetauscht werden, können daher von weiteren Master-Knoten und weiteren Slave-Knoten, im Gegensatz zur Daisy-Chain Bus Topology und Parallel Bus Topology, nicht gesehen bzw. empfangen werden. Die Verbindung zwischen dem Matser-Knoten und dem Slave-Knoten kann als private Leitung bezeichnet werden.

Bei zeitkritischen Systemen, wie z.B. Ultraschallsystemen, bei denen mehrere Slaves, z.B. USP-Sensoren, synchronisiert, d.h. im Wesentlichen zur selben Zeit, eine bestimmte Aktion ausführen, z.B. einen Ultraschallimpuls aussenden, sollen, führt die P2P-Topologie zu Herausforderungen.

Im Detail: Eine Abstandsmessung beruht auf einer Laufzeitmessung eines Ultraschallsignals, das von einem USPA-Sensor ausgestrahlt bzw. ausgesendet wird. Ein Ultraschallsystem weist mehrerer solcher Sensoren auf, sodass für eine Abstandsmessung mehrere Ultraschallsignale ausgesendet werden. Die Reflektionen der Ultraschallsignale werden von allen Sensoren erfasst und ausgewertet. Damit eine Abstandsmessung sinnvoll möglich ist, müssen daher die Ultraschallsignal von allen Sensoren im Wesentlichen zur gleichen Zeit ausgesendet werden. Bei herkömmlichen Systemen wird dies dadurch erreicht, dass eine Daisy-Chain- oder parallele Bustopologie verwendet wird, sodass ein vom Master ausgesendetes Steuersignal, welches die Sensoren bzw. Slaves veranlasst, das Ultraschallsignal auszugeben, von allen Slaves im Wesentlichen zur gleichen Zeit empfangen wird. Insofern die Slaves die im Wesentlichen gleiche Latenzzeit aufweisen, gibt jeder Slave im Wesentlichen zur gleichen Zeit das Ultraschallsignal aus. Wie oben dargelegt, ist dies bei einer P2P-Topologie aber nicht möglich, da die einzelnen Slaves einzelnen Master-Knoten zugeordnet sind, sodass nicht durch Ausgeben eines einzigen Signals vom Master an die Slaves eine Zeitsynchronisation der Slaves erreicht wird.

Vor dem Hintergrund dieses Standes der Technik besteht die Aufgabe der vorliegenden Offenbarung darin, eine Vorrichtung und ein Verfahren anzugeben, welche jeweils geeignet sind, den Stand der Technik zu bereichern.

Gelöst wird die Aufgabe durch die Merkmale des unabhängigen Anspruchs. Die nebengeordneten Ansprüche und die Unteransprüche haben optionale Weiterbildungen der Offenbarung zum Inhalt.

Danach wird die Aufgabe durch Gateway zur Verbindung mit einem Host-Prozessor und mehreren Slaves gelöst, wobei das Gateway und die Slaves in einer P2P-Topologie organisiert sind, sodass das Gateway für jeden der Slaves einen unabhängigen Kanal aufweist. Das Gateway ist ausgestaltet, um mehrere Steuersignale, umfassend jeweils zumindest ein Steuersignal für jeweils einen vorbestimmten Slave der mehreren Slaves, von dem Host-Prozessor zu empfangen, zu bestimmen, ob sich die Slaves, für die das zumindest eine Steuersignal empfangen wurde, in einem einsatzfähigen Zustand befinden, und die von dem HostProzessor empfangenen Steuersignale erst dann zeitgleich an die Slaves, für die das zumindest eine Steuersignal empfangen wurde, auszugeben, wenn sich alle Slaves, für die das zumindest eine Steuersignal empfangen wurde, in dem einsatzfähigen Zustand befinden.

Unter einem Gateway kann eine Komponente (aufweisend Hard- und/oder Software) verstanden werden, welche zwischen zwei Systemen bzw. Kommunikationsbussen eine Verbindung herstellt. Das Gateway stellt also die Brücke zur Kommunikation zwischen einem einzigen oder mehreren Hostprozessoren und mehreren Slaves dar.

Vorliegend ist der Host-Prozessor über das Gateway zu mehreren Slaves, optional Sensoren (z.B. Ultraschallsensoren) verbunden. In der Automobiltechnik finden sich solche Gateways oft zwischen den verschiedenen Datenbussen. Für bestimmte Zwecke (z.B. Diagnose und/oder Steuerung) werden manche Daten auch auf dem jeweils anderen Bus zur Verfügung gestellt. Für diesen Zweck "kopiert" das Gateway die Daten von einem Bus auf den anderen.

Das Gateway ist damit, wie bereits durch den Begriff Gateway impliziert ist, eine Komponenten, die ausgestaltet ist, um von dem Host-Prozessor gemäß einem ersten Kommunikationsstandard (z.B. SPI) empfangene Daten in einen zweiten, vom ersten Kommunikationsstandard verschiedenen Kommunikationsstandard (z.B. DSI3) zu wandeln und an die Slaves auszugeben, und/oder um von den Slaves gemäß dem zweiten Kommunikationsstandard empfangene Daten in den ersten Kommunikationsstandard zu wandeln und an den Host-Prozessor mittels dem ersten Kommunikationsstandard auszugeben. Weiterhin wird auf die einleitenden Ausführungen betreffend das Gateway im Rahmen der Würdigung des Standes der Technik verwiesen, welche hier mutatis mutandis bzw. analog Anwendung finden können.

Das Gateway kann als eigenes Steuergerät auftreten oder Teil eines vorhandenen, größeren Steuergeräts sein, welches Verbindungen zu verschiedenen bzw. weiteren Busvarianten bedienen kann.

Bei dem Gateway kann es sich um einen integrierten Schaltkreis, auch integrierte Schaltung (englisch integrated circuit, kurz IC) handeln oder das Gateway kann einen solchen aufweisen. Unter einem IC kann eine auf einem optional dünnen, z.B. einige Millimeter, großen Plättchen aus Halbleiter-Material aufgebrachte elektronische Schaltung verstanden werden. Die Schaltung wird manchmal auch als Festkörperschaltkreis oder monolithischer Schaltkreis (englisch solid-state circuit bzw. monolithic integrated circuit) bezeichnet. Dieser Chip (englisch Die) ist meist zum Schutz und zur einfacheren Kontaktierung in einem mehrfach größeren Chipgehäuse eingekapselt. Der IC kann eine Kombination von zahlreichen miteinander elektrisch verbundenen elektronischen Halbleiterbauelementen, wie Transistoren, Dioden und/oder weiteren aktiven und passiven Bauelementen, aufweisen.

Denkbar ist, dass es sich bei den Slaves um Ultraschallsensoren (optional als Transceiver ausgeführt) handelt und dass die Steuersignale ausgestaltet sind, um die jeweiligen Ultraschallsensoren zu veranlassen eine Ultraschallsignal auszugeben, sobald die Steuersignale am jeweiligen Ultraschallsensor empfangen werden.

Das oben beschriebene Gateway erlaubt es bei zeitkritischen Systemen, wie z.B. Ultraschallsystemen, mehrere Slaves, z.B. Ultraschallsensoren, auch bei der Verwendung einer P2P-(Bus-)Topologie zu synchronisieren, da durch eine Zwischenpufferung von Steuersignalen zunächst gewartet werden kann bis alle Steuersignale im Gateway angekommen sind und anschließend die Steuersignale zeitgleich an die Slaves ausgegeben werden, die sich bereits in dem einsatzfähigen Zustand befinden, sodass es auch auf seitens des Slaves nicht mehr zu einem asynchronen Verhalten kommt.

Nachfolgend werden mögliche Weiterbildungen der oben beschriebenen Datenverarbeitungsvorrichtung im Detail erläutert. Alle diese Weiterbildungen verstärken alleine oder in Kombination die oben beschriebenen Vorteile der offenbarungsgemäßen Datenverarbeitungsvorrichtung.

Das Gateway kann ausgestaltet sein, um basierend auf einer von dem jeweiligen Slave empfangenen Information zu bestimmen, ob sich der jeweilige Slave in dem einsatzfähigen Zustand befindet.

Das Gateway kann ausgestaltet sein, um basierend auf einer von dem HostProzessor empfangenen Information zu bestimmen für welchen der Slaves der mehreren Slaves ein jeweiliges vom Host-Prozessor empfangenes Steuersignal der mehreren Steuersignale bestimmt ist.

Dies bietet den Vorteil, dass nicht alle Kanäle bzw. Slaves, die mit dem Gateway verbunden sind, synchronisiert werden müssen, sondern Gateway intern Messgruppen synchronerer Slaves gebildet werden können.

Das Gateway kann einen Speicher zum Zwischenspeichern der vom Host-Prozessor empfangenen Steuersignale aufweisen. Je nach Anforderungen an eine Funktionale Sicherheit kann dieser Speicher mit einem Fehlerkorrekturverfahren (z.B. ECC, Error-Correction-Code) abgesichert sein.

Das Gateway kann ausgestaltet sein, um ein weiteres Steuersignal von dem HostProzessor zu empfangen. Das Gateway kann ausgestaltet sein, um die von dem Host-Prozessor empfangenen Steuersignale erst dann zeitgleich an die Slaves, für die das Steuersignal empfangen wurde, auszugeben, wenn sich alle Slaves, für die das Steuersignal empfangen wurde, in dem einsatzfähigen Zustand befinden und das weitere Steuersignal an dem Gateway von dem Host-Prozessor empfangen wurde.

Das weitere Steuersignal ermöglicht die Umsetzung von Messgruppen aufweisend Slaves, die von verschiedenen Gateways gesteuert werden bzw. zum HostProzessor über verschiedene Gateways verbunden sind. Im Detail: Bei Ultraschallsystemen weisen die meisten Systeme sechs oder zwölf Sensoren bzw. Slaves auf. Nun kann der Fall eintreten, dass diese Sensoren über Gateways angesteuert werden sollen, welche eine von den Sensoren abweichende Anzahl an Kanälen aufweist, z.B. vier Kanäle. Damit alle Kanäle synchronisiert werden können oder Gateway übergreifende Messgruppen erzeugt werden können, können die Gateways ausgestaltet sein, um durch das weitere Steuersignal vom Host-Prozessor aus synchronisiert zu werden.

Das Gateway kann eine erste Schnittstelle zur Kommunikation mit dem HostProzessor mittels eines ersten Kommunikationsstandards, eine zweite Schnittstelle zur Kommunikation mit dem Sensor mittels eines zweiten Kommunikationsstandards, und einen zur ersten und/oder zur zweiten Schnittstelle verbundenen Speicher zur Zwischenspeicherung von Daten, die über die erste und/oder die zweite Schnittstelle an dem Gateway empfangen werden, umfassen. Der Speicher kann mittels einem Fehlererkennungsverfahren und/oder einem Fehlerkorrekturverfahren abgesichert.

Das Gateway kann damit, wie bereits durch den Begriff Gateway impliziert ist, eine Komponenten sein, die ausgestaltet ist, um von dem Host-Prozessor an der ersten Schnittstelle gemäß dem ersten Kommunikationsstandard empfangene Daten in den zweiten, vom ersten Kommunikationsstandard verschiedenen Kommunikationsstandard zu wandeln und über die zweite Schnittstelle an den Sensor auszugeben, und/oder um von dem Sensor an der zweiten Schnittstelle gemäß dem zweiten Kommunikationsstandard empfangene Daten in den ersten Kommunikationsstandard zu wandeln und über die erste Schnittstelle an den HostProzessor auszugeben.

Bei dem ersten Kommunikationsstandard kann es sich z.B. um SPI (Serial Peripheral Interface und zugehöriges Kommunikations- bzw. Busprotokoll) und bei dem zweiten Kommunikationsstandard kann es sich z.B. um DSI (Distributed Systems Interface (z.B. mit drei Ein- und Ausgängen bzw. DSI3) und zugehöriges Kommunikations- bzw. Busprotokoll) handeln.

Bei dem Speicher kann es sich um einen Pufferspeicher bzw. einen Zwischenspeicher handeln, in dem Daten des zweiten Kommunikationsstandards, die über die zweite Schnittstelle empfangen werden, zwischengespeichert werden, bevor die Daten von dem Speicher an die erste Schnittstelle und von dort an den Host-Prozessor ausgegeben werden. Dadurch kann der Host-Prozessor entlastet werden.

Zusätzlich oder alternativ kann es sich um einen Pufferspeicher bzw. einen Zwischenspeicher handeln, in dem Daten des ersten Kommunikationsstandards, die über die erste Schnittstelle empfangen werden, zwischengespeichert werden, bevor die Daten von dem Speicher an die zweite Schnittstelle und von dort an den HostProzessor ausgegeben werden. Denkbar ist, dass die Daten des ersten Kommunikationsstandards zunächst in dem Speicher zwischengespeichert bzw. gepuffert werden (im Fall von SPI sog. SPI command queue), anschließend zur Umwandlung in den zweiten Kommunikationsstandard von dem Speicher an eine Steuereinheit des Gateways ausgegeben werden und bis zur vollständigen Umwandlung der Daten von dem ersten in den zweiten Kommunikationsstandard durch die Steuereinheit in dem Speicher zwischengepuffert werden (im Fall von DSI sog. DSI command queue), bevor die in dem zweiten Kommunikationsstandard in dem Speicher vorliegenden Daten an die zweite Schnittstelle und von dort an den Sensor ausgegeben werden.

Unter einem Fehlerkorrekturverfahren, auch Error Correcting Code oder Error Checking and Correction (ECC), kann ein Verfahren verstanden werden, das dazu dient, Fehler bei der Speicherung und/oder Übertragung (z.B. Bit-Flip) von Daten zu erkennen und wenn möglich zu korrigieren. Fehlererkennungsverfahren beschränken sich auf das Feststellen, ob ein Fehler vorliegt, z.B. durch Auswerten eines Paritätsbits. Dazu wird vor der Datenspeicherung oder Übertragung den Nutzdaten zusätzliche Redundanz hinzugefügt, meist in Form zusätzlicher Bits, die auf der Zielseite zum Erkennen von Fehlern und zum Bestimmen der Fehlerposition(en) genutzt wird.

Die obige Ausgestaltung bietet eine Reihe von Vorteilen, wie nachfolgend im Detail beschrieben.

Durch einen steigenden Automatisierungsgrad von Kraftfahrzeugen steigt ein benötigtes Maß an Funktionaler Sicherheit einzelner im Kraftfahrzeug verwendeter bzw. verbauter Einzelsysteme sowie einem Zusammenspiel dieser Einzelsysteme bzw. --Komponenten.

Die Funktionale Sicherheit (abgekürzt auch FuSi) bezeichnet den Teil der Sicherheit eines Systems, der von der korrekten Funktion des sicherheitsbezogenen Systems und anderer risikomindernder Maßnahmen abhängt.

Um verschiedene Anforderungen bzgl. der Funktionalen Sicherheit bei Kraftfahrzeugen zu definieren existiert das Automotive Safety Integrity Level (ASIL), welches ein Risikoklassifizierungsschema ist, das in der Norm ISO 26262 - Funktionale Sicherheit für Straßenfahrzeuge definiert ist. Es handelt sich dabei um eine Anpassung des Sicherheitsintegritätsniveaus (SIL), das in der IEC 61508 für die Automobilbranche verwendet wird. Diese Klassifizierung hilft bei der Festlegung der Sicherheitsanforderungen, die erforderlich sind, um der ISO 26262-Norm zu entsprechen. Das ASIL wird durch die Durchführung einer Risikoanalyse einer potenziellen Gefahr unter Berücksichtigung von Schweregrad, Exposition und Kontrollierbarkeit des Fahrzeugbetriebsszenarios ermittelt. Das Sicherheitsziel für diese Gefahr enthält wiederum die ASIL-Anforderungen.

In der Norm werden vier ASILs unterschieden: ASIL A, ASIL B, ASIL C, ASIL D. ASIL D stellt die höchsten Integritätsanforderungen an das Produkt, ASIL A die niedrigsten. Gefahren, die als QM gekennzeichnet sind, stellen keine Sicherheitsanforderungen.

Auch Gateways sollten FuSi Anforderungen erfüllen. In der Automobiltechnik finden sich Gateways oft zwischen den verschiedenen Datenbussen, wie CAN in verschiedenen Geschwindigkeitsversionen, z.B. MOST-Bus. Eine typische Konfiguration in einem Automobil besteht aus einem "schnellen" CAN-Bus für Motorsteuerung und ähnliche Echtzeit-Steuergeräte und einem "langsamen" CAN-Bus für Steuergeräte mit wenigen und selten anfallenden Daten ("Komfort-Bus", für Reifendruckkontrolle oder Tankgeber). Für bestimmte Zwecke (z.B. Diagnose und/oder Steuerung) müssen manche Daten auch auf dem jeweils anderen Bus zur Verfügung gestellt werden. Für diesen Zweck kopiert das Gateway die Daten von einem Bus auf den anderen. Dieses Gateway kann als eigenes Steuergerät auftreten oder Teil eines vorhandenen, größeren Steuergeräts sein, welches Verbindungen zu allen Busvarianten bedienen muss.

Insbesondere bei Ultraschall-Messsystemen, die z.B. für eine Einparkhilfe verwendet werden, aber auch bei anderen Sensoren eines Kraftfahrzeugs wird ein von dem Sensor ausgegebenes Signal über ein Gateway an einen Host-Prozessor und ein Steuersignal von dem Host-Prozessor über das Gateway an den Sensor übertragen. Das Gateway stellt dabei die Kompatibilität zweier verschiedener Kommunikationsstandards, d.h. einem ersten Kommunikationsstandard, mit dem der Sensor mit dem Gateway kommuniziert, und einem zweiten Kommunikationsstandard, mit dem der Host-Prozessor mit dem Gateway kommuniziert, sicher. Mit anderen Worten, das Gateway "übersetzt" von dem ersten in den zweiten Kommunikationsstandard und umgekehrt, sodass der Sensor mit dem Host-Prozessor und umgekehrt kommunizieren kann. Damit dieses System aus Host-Prozessor, Gateway und Sensor ASIL-Anforderungen erfüllt, kann es nötig sein, dass das Gateway selbst ASIL-Anforderungen erfüllt.

Dadurch, dass der Speicher mittels einem Fehlererkennungsverfahren und/oder einem Fehlerkorrekturverfahren abgesichert ist, kann bei einer, insbesondere auch bidirektionalen, Kommunikation über den Gateway eine Datenkorruption von in dem Speicher gespeicherten, insbesondere zwischengepufferten, Daten vermieden bzw. erkannt werden. Damit können bestimmte Ziele in Bezug auf die funktionale Sicherheit erreicht werden, wie z.B. ein benötigtes ASIL Level (optional ASIL B).

Die erste Schnittstelle kann ausgestaltet sein, um einen ersten Error Correction Code basierend auf an der ersten Schnittstelle empfangenen Daten zu erzeugen und den erzeugten ersten Error Correction Code zusammen mit den an der ersten Schnittstelle empfangenen Daten zu dem Speicher auszugeben. Zusätzlich oder alternativ kann die zweite Schnittstelle ausgestaltet sein, um basierend auf an der zweiten Schnittstelle empfangenen Daten einen zweiten Error Correction Code zu erzeugen und den erzeugten zweiten Error Correction Code zusammen mit den an der zweiten Schnittstelle empfangenen Daten zu dem Speicher auszugeben.

Unter einem Error Correction Code bzw. error-correcting code (ECC) kann eine Kodierung zur Fehlerkorrektur verstanden, die im Gegensatz zur Paritätsprüfung in der Lage ist, einen 1-Bit-Fehler zu korrigieren und einen 2-Bit-Fehler zu erkennen. Das ECC-Verfahren benötigt z.B. auf 32 Bit 6 Check-Bits und auf 64 Bit 7 Check-Bits. Mit dem erzeugten Error Correction Code sind diese Check-Bits gemeint. Im Detail: In der Informatik, der Telekommunikation, der Informationstheorie und der Codierungstheorie wird ein Error Correction Code bzw. Fehlerkorrekturcode (ECC), zur Kontrolle von Datenfehlern über unzuverlässige oder verrauschte Kommunikationskanäle verwendet. Die zentrale Idee ist, dass der Sender die Nachricht mit redundanten Informationen in Form eines ECC codiert. Die Redundanz ermöglicht es dem Empfänger, eine begrenzte Anzahl von Fehlern zu erkennen, die überall in der Nachricht auftreten können, und diese Fehler oft ohne erneute Übertragung zu korrigieren. ECC unterscheidet sich von der Fehlererkennung insofern, als aufgetretene Fehler korrigiert und nicht nur erkannt werden können. Der Vorteil ist, dass ein System, das ECC verwendet, keinen Rückkanal benötigt, um eine erneute Übertragung von Daten anzufordern, wenn ein Fehler auftritt.

Der Speicher kann ausgestaltet sein, um mittels dem am Speicher empfangenen ersten Error Correction Code einen Fehler in den von der ersten Schnittstelle empfangenen Daten zu erkennen, und optional zu korrigieren. Zusätzlich oder alternativ kann der Speicher ausgestaltet ist, um mittels dem am Speicher empfangenen zweiten Error Correction Code einen Fehler in den von der zweiten Schnittstelle empfangenen Daten zu erkennen, und optional zu korrigieren.

Der Speicher kann ausgestaltet sein, um den empfangenen ersten Error Correction Code zusammen mit den von der ersten Schnittstelle empfangenen Daten an die zweite Schnittstelle auszugeben. Die zweite Schnittstelle kann ausgestaltet sein, um mittels dem an der zweiten Schnittstelle empfangenen ersten Error Correction Code einen Fehler in den an der ersten Schnittstelle von dem Speicher empfangenen Daten zu erkennen, und optional zu korrigieren. Zusätzlich oder alternativ kann der Speicher ausgestaltet sein, um den empfangenen zweiten Error Correction Code zusammen mit den von der zweiten Schnittstelle empfangenen Daten an die erste Schnittstelle auszugeben. Die erste Schnittstelle kann ausgestaltet sein, um mittels dem an der ersten Schnittstelle empfangenen zweiten Error Correction Code einen Fehler in den an der ersten Schnittstelle von dem Speicher empfangenen Daten zu erkennen, und optional zu korrigieren.

Das Gateway kann eine Steuereinheit aufweisen, die über den Speicher zu der ersten und/oder der zweiten Schnittstelle verbunden ist. Der Speicher kann ausgestaltet sein, um den empfangenen ersten Error Correction Code zusammen mit den von der ersten Schnittstelle empfangenen Daten über die Steuereinheit an die zweite Schnittstelle auszugeben. Die Steuereinheit kann ausgestaltet sein, um mittels dem an der Steuereinheit empfangenen ersten Error Correction Code einen Fehler in den an der Steuereinheit von dem Speicher empfangenen Daten zu erkennen, und optional zu korrigieren
Die erste Schnittstelle kann ausgestaltet sein, um die an der ersten Schnittstelle empfangenen Daten mittels einer zyklischen Redundanzprüfung zu prüfen. Zusätzlich oder alternativ kann die zweite Schnittstelle ausgestaltet sein, um die an der zweiten Schnittstelle empfangenen Daten mittels einer zyklischen Redundanzprüfung zu prüfen.

Die zyklische Redundanzprüfung (englisch cyclic redundancy check, daher meist CRC) ist ein Verfahren zur Bestimmung eines Prüfwerts für Daten, um Fehler bei der Übertragung und/oder Speicherung erkennen zu können. Vor der Datenspeicherung und/oder Übertragung kann für jeden Datenblock der Nutzdaten zusätzliche Redundanz in Form eines sogenannten CRC-Werts angefügt werden. Dieser ist ein nach einem bestimmten Verfahren berechneter Prüfwert, mit dessen Hilfe man während der Speicherung bzw. Übertragung eventuell aufgetretene Fehler erkennen kann. Zur Überprüfung der Daten wird dasselbe Berechnungsverfahren auf den Datenblock einschließlich des angefügten CRC-Werts angewandt. Ist das Ergebnis dann null, kann angenommen werden, dass der Datenblock unverfälscht ist. Verschiedene technische Anwendungen weichen allerdings von diesem Schema ab, indem sie beispielsweise die Berechnung mit einem bestimmten Wert initialisieren oder den CRC-Wert vor der Übermittlung invertieren. Auch dies ist von der Offenbarung umfasst.

Ferner betrifft die Offenbarung ein System zur Datenverarbeitung, umfassend das oben beschriebene Gateway, einen zu dem Gateway verbundenen Host-Prozessor, der ausgestaltet ist, um die mehreren Steuersignale, umfassend jeweils das zumindest eine Steuersignal für jeweils einen vorbestimmten Slave der mehreren Slaves, an das Gateway auszugeben, und mehrere zu dem Gateway verbundene Slaves, wobei das Gateway und die Slaves in einer P2P-Topologie organisiert sind, sodass das Gateway für jeden der Slaves einen unabhängigen Kanal aufweist.

Bei dem Host-Prozessor kann es sich um eine elektronische Steuereinheit (engl. ECU = electronic control unit) handeln. Das elektronische Steuergerät bzw. die elektronische Steuereinheit kann eine intelligente prozessorgesteuerte Einheit sein, die z.B. über das Gateway, optional als Central Gateway (CGW) ausgeführt, mit anderen Modulen kommunizieren kann und die ggf. über Feldbusse, wie den CAN-Bus, LIN-Bus, MOST-Bus, FlexRay, DSI und/oder über Automotive-Ethernet, z.B. zusammen mit Telematiksteuergeräten und/oder einer Umfeldsensorik aufweisend einen einzigen oder mehrere Sensoren, das Fahrzeugbordnetz bilden kann. Denkbar ist, dass das Steuergerät für das Fahrverhalten des Kraftfahrzeugs relevante Funktionen, wie die Motorsteuerung, die Kraftübertragung, das Bremssystem, eine Lenkung und/oder das Reifendruck-Kontrollsystem, steuert. Außerdem können Fahrerassistenzsysteme, wie beispielsweise ein Parkassistent, eine angepasste Geschwindigkeitsregelung (ACC, engl. Adaptive Cruise Control), ein Spurhalteassistent, ein Spurwechselassistent, eine Verkehrszeichenerkennung, eine Lichtsignalerkennung, ein Anfahrassistent, ein Nachtsichtassistent, einen Einparkassistenten und/oder ein Kreuzungsassistent, von dem Steuergerät gesteuert werden.

Die Slaves können jeweils ausgestaltet sein, um die Information an das Gateway auszugeben, basierend auf welcher das Gateway bestimmen kann, ob sich der jeweilige Slave in dem einsatzfähigen Zustand befindet.

Der Host-Prozessor kann ausgestaltet sein, um die Information an das Gateway auszugeben, basierend auf welcher das Gateway bestimmen kann für welchen der Slaves der mehreren Slaves ein jeweiliges vom Host-Prozessor empfangenes Steuersignal der mehreren Steuersignale bestimmt ist.

Der Host-Prozessor kann ausgestaltet sein, um das weitere Steuersignal an das Gateway auszugeben.

Ferner betrifft die Offenbarung ein Kraftfahrzeug, umfassend das oben beschriebene Gateway oder das oben beschriebene System zur Datenverarbeitung.

Bei dem Kraftfahrzeug kann es sich um einen Personenkraftwagen, wie ein Automobil, ein motorisiertes Zwei- oder Dreirad, und/oder ein Nutzfahrzeug, wie einen Lastkraftwagen, handeln.

Das Kraftfahrzeug kann automatisiert sein. Das Kraftfahrzeug kann ausgestaltet sein, um eine Längsführung und/oder eine Querführung bei einem automatisierten Fahren des Kraftfahrzeugs zumindest teilweise und/oder zumindest zeitweise zu übernehmen.

Das automatisierte Fahren kann so erfolgen, dass die Fortbewegung des Kraftfahrzeugs (weitgehend) autonom erfolgt. Das automatisierte Fahren kann zumindest teilweise und/oder zeitweise durch das Gateway oder das System zur Datenverarbeitung gesteuert werden.

Das Kraftfahrzeug kann ein Kraftfahrzeug der Autonomiestufe 1 sein, d.h. bestimmte Fahrerassistenzsysteme aufweisen, die den Fahrer bei der Fahrzeugbedienung unterstützen, wie beispielsweise der Abstandsregeltempomat (ACC).

Das Kraftfahrzeug kann ein Kraftfahrzeug der Autonomiestufe 2 sein, d.h. so teilautomatisiert sein, dass Funktionen wie automatisches Einparken, Spurhalten bzw. Querführung, allgemeine Längsführung (insb. Anfahren), Beschleunigen und/oder Abbremsen von Fahrerassistenzsystemen übernommen werden können.

Das Kraftfahrzeug kann ein Kraftfahrzeug der Autonomiestufe 3 sein, d.h. so bedingungsautomatisiert, dass der Fahrer das System Fahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Dingen zuwenden, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d.h. so hochautomatisiert, dass die Führung des Fahrzeugs dauerhaft vom System Fahrzeug übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d.h. so vollautomatisiert, dass der Fahrer zum Erfüllen der Fahraufgabe nicht erforderlich ist. Außer dem Festlegen des Ziels und dem Starten des Systems ist kein menschliches Eingreifen erforderlich. Das Kraftfahrzeug kann ohne Lenkrad und Pedale auskommen.

Das oben mit Bezug zum Gateway und zum System zur Datenverarbeitung Beschriebene gilt analog auch für das Kraftfahrzeug und umgekehrt.

Ferner betrifft die Offenbarung ein Verfahren zum Betreiben des oben beschriebenen Gateways. Das Verfahren umfasst ein Empfangen mehrerer Steuersignale, umfassend jeweils zumindest ein Steuersignal für jeweils einen vorbestimmten Slave der mehreren Slaves, von dem Host-Prozessor an dem Gateway, ein Bestimmen, ob sich die Slaves, für die das zumindest eine Steuersignal empfangen wurde, in einem einsatzfähigen Zustand befinden, und ein zeitgleiches Ausgeben der von dem HostProzessor empfangenen Steuersignale an die Slaves, für die das zumindest eine Steuersignal empfangen wurde, erst dann, wenn sich alle Slaves, für die das zumindest eine Steuersignal empfangen wurde, in dem einsatzfähigen Zustand befinden.

Bei dem Verfahren kann es sich um ein computer-implementiertes Verfahren handeln, d.h. einer, mehrere oder alle Schritte des Verfahrens können zumindest teilweise von einem Computer bzw. einer Vorrichtung zur Datenverarbeitung bzw. einer Datenverarbeitungsvorrichtung ausgeführt werden.

Das Verfahren kann ein Absichern von mittels der ersten und/oder der zweiten Schnittstelle empfangenen Daten mittels eines Fehlererkennungsverfahrens und/oder eines Fehlerkorrekturverfahrens an der ersten Schnittstelle, der zweiten Schnittstelle und/oder dem Speicher umfassen.

Das oben mit Bezug zum Gateway, zum System zur Datenverarbeitung und zum Kraftfahrzeug Beschriebene gilt analog auch für das Verfahren und umgekehrt.

Ferner wird Computerprogramm, umfassend Befehle, die bei der Ausführung des Programms durch einen Computer diesen veranlassen, das oben beschriebene Verfahren zumindest teilweise auszuführen.

Ein Programmcode des Computerprogramms kann in einem beliebigen Code vorliegen, insbesondere in einem Code, der für Steuerungen von Kraftfahrzeugen geeignet ist.

Bei dem Computer kann es sich um das oben beschriebene Gateway oder das oben beschriebene System zur Datenverarbeitung handeln.

Das oben mit Bezug zum Gateway, zum System zur Datenverarbeitung, zum Kraftfahrzeug und zum Verfahren Beschriebene gilt analog auch für das Computerprogramm und umgekehrt.

Ferner wird ein computerlesbares Medium, insbesondere ein computerlesbares Speichermedium, bereitgestellt, das das oben beschriebene Computerprogramm zumindest teilweise umfasst.

Das heißt, es kann ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte.

Das Computerprogramm muss nicht zwingend auf einem solchen computerlesbaren Speichermedium gespeichert sein, um dem Kraftfahrzeug zur Verfügung gestellt zu werden, sondern kann auch über das Internet oder anderweitig extern bezogen werden.

Das computerlesbare Medium kann Befehle umfassen, die bei der Ausführung der Befehle durch einen Computer, optional das oben beschriebene Gateway und/oder das oben beschriebene System zur Datenverarbeitung, diesen veranlassen, das oben beschriebene Verfahren zumindest teilweise auszuführen.

Das oben mit Bezug zum Gateway, zum System zur Datenverarbeitung, zum Kraftfahrzeug, zum Verfahren und zum Computerprogramm Beschriebene gilt analog auch für das computerlesbare Medium und umgekehrt.

Nachfolgend wird eine optionale Ausführungsform mit Bezug zu Figuren 1 bis 5 beschrieben.
- Fig. 1: zeigt schematisch ein System zur Datenverarbeitung aufweisend ein offenbarungsgemäßes Gateway,
- Fig. 2: zeigt schematisch ein Ablaufdiagramm eines Verfahrens zum Betreiben des Systems zur Datenverarbeitung aus Figur 1,
- Fig. 3: zeigt schematisch ein offenbarungsgemäßes Gateway, das Teil des Systems zur Datenverarbeitung aus Figur 1 ist, in einem ersten Zustand, in dem Daten eines Host-Prozessors über das Gateway an einen Sensor übertragen werden,
- Fig. 4: zeigt schematisch das offenbarungsgemäße Gateway, das Teil des Systems zur Datenverarbeitung aus Figur 1 ist, in einem zweiten Zustand, in dem Daten des Sensors über das Gateway an den Host-Prozessor übertragen werden, und
- Fig. 5: zeigt schematisch ein Ablaufdiagramm eines weiteren offenbarungsgemäßen Verfahrens zum Betreiben des in Figur 1 dargestellten Systems zur Datenverarbeitung, insbesondere des in den Figuren 3 und 4 dargestellten Gateways.

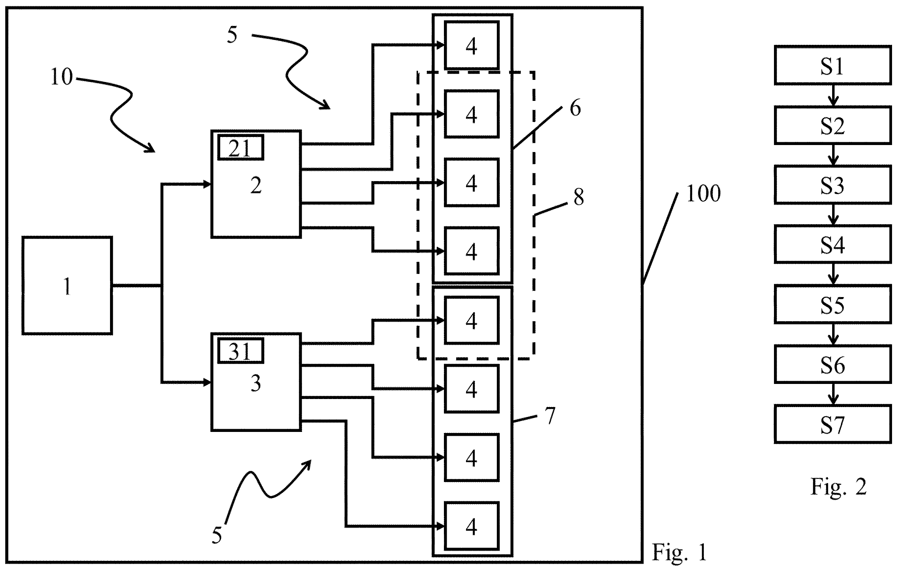

Das in Figur 1 dargestellte System zur Datenverarbeitung 10 weist einen HostProzessor 1, zwei Gateways 2, 3 und je Gateway vier als (Ultraschall-) Sensoren ausgeführte Slaves 4 auf. Der Host-Prozessor 1 ist über die Gateways 2, 3, die mittels einer P2P-Busstoppologie, d.h. über unabhängige Kanäle 5, zu dem jeweiligen Gateway 2, 3 verbunden sind, verbunden. Die Sensoren lassen sich abhängig von dem Gateway 2, 3 zu dem sie verbunden sind in eine erste Gruppe 6 und eine zweite Gruppe 7 aufteilen. Das System zur Datenverarbeitung ist Teil eines Kraftfahrzeugs 100.

Das System zur Datenverarbeitung 10 ist ausgestaltet, um das nachfolgend auch mit Bezug zu Figur 2 beschriebene Verfahren auszuführen.

In einem ersten Schritt S1 des Verfahren gibt der Host-Prozessor 1 mehrere Steuersignale, umfassend jeweils zumindest ein Steuersignal für jeweils einen vorbestimmten Slave 4 der mehreren Slaves 4 und eine Information darüber, für welchen Slave 4 das jeweilige Steuersignal bestimmt ist, von dem Host-Prozessor 1 zu den Gateways 2, 3 aus.

In einem zweiten Schritt S2 des Verfahrens bestimmen die Gateways 2, 3 jeweils für welchen der Slaves 4 das jeweilige empfangene Steuersignal bestimmt ist und legen das jeweilige Steuersignal entsprechend in einem Speicher 21, 31 des Gateways 2, 3 zum Zwischenspeichern der vom Host-Prozessor 1 empfangenen Steuersignale ab. Dies erfolgt basierend auf den in den Steuersignalen enthaltenen Informationen, die am jeweiligen Gateway 2,3 von dem Hostprozessor 1 zusammen mit den Steuersignalen empfangen wird.

In einem dritten Schritt S3 des Verfahrens geben die Slaves 4 jeweils eine Information über den jeweiligen Kanal 5 an das jeweilige Gateway 2, 3 aus, zu dem sie verbunden sind, wobei die Information signalisiert, dass sich der jeweilige Slave 4 in einem einsatzfähigen Zustand befindet.

In einem vierten Schritt S4 des Verfahrens bestimmen die Gateways 2, 3 jeweils basierend auf der von dem jeweiligen Slave 4 empfangenen Information, ob sich der jeweilige Slave 4 in dem einsatzfähigen Zustand befindet. Das erste Gateway 2 führt dies für die erste Gruppe 6 von Slaves 4 und das zweite Gateway 3 führt dies für die zweite Gruppe 7 von Slaves 4 aus. Denkbar ist, dass das jeweilige Gateway 2, 3 ein Signal an den Host-Prozessor 1 ausgibt, sobald die zu dem jeweiligen Gateway 2, 3 verbundenen Slaves 4 einsatzfähig sind.

In einem fünften Schritt S5 des Verfahrens gibt der Host-Prozessor 1 ein weiteres Steuersignal an die Gateways 2, 3 aus, welches den Gateways 2, 3 signalisiert, dass auch die Slaves 4 des jeweils anderen Gateways 2, 3 einsatzfähig sind und dass die im jeweiligen Speicher 21, 31 hinterlegten Steuersignale an die jeweilige Gruppe 6, 7 von Slaves 4 ausgegeben werden sollen.

In einem sechsten Schritt S6 des Verfahrens geben die Gateways 2, 3, wenn diese jeweils festgestellt haben, dass sowohl die Slaves 4, für die die Steuersignale im jeweiligen (Zwischen-) Speicher 21, 31 bestimmt sind, einsatzfähig sind als auch dass weitere Steuersignal von dem Host-Prozessor am jeweiligen Gateway 22, 3 empfangen wurde, die im jeweiligen Speicher 21, 31 hinterlegten Steuersignale zeitgleich an die Slaves 4 aus, für die die jeweiligen Steuersignale bestimmt sind.

Daraufhin geben die Slaves 4 beider Gruppen 6, 7, die das entsprechende Steuersignal von dem Gateway 2, 3 empfangen, zu dem sie verbunden sind, in einem siebten Schritt S7 des Verfahrens im Wesentlichen zeitgleich ein Ultraschallsignal aus.

Das obige Verfahren bietet daher im Wesentlichen zwei Vorteile. Zunächst lassen sich die Slaves 4 zeitlich synchronisieren, die an dasselbe Gateway über die P2P-Topologie angeschlossen sind. Darüber hinaus lassen sich auch die Slaves 4, die an verschiedene Gateways 2, 3 (s. dazu oben Gruppen 6, 7) angeschlossen sind, zeitlich synchronisieren. Dabei sei angemerkt, dass nicht alle Slaves 4, die an dasselbe Gateway 2, 3 angeschlossen sind, einer einzigen Gruppe angehören müssen, d.h. es müssen nicht alle Slaves 4 eines Gateways 2, 3 zeitglich ein (Ultraschall-) Signal ausgeben. Vielmehr bietet das Verfahren noch einen dritten Vorteil, der aus einer Kombination der beiden vorgenannten Vorteile resultiert. Genauer gesagt besteht dieser dritte Vorteil darin, dass sich die Slaves 4 verschiedener Gateways 2, 3 in beliebiger Weise trotz P2P-Topologie zueinander zeitlich synchronisieren lassen, wir durch die mit gestrichelter Linie angedeutete Gruppe 8 in Figur 1 symbolisieren soll.

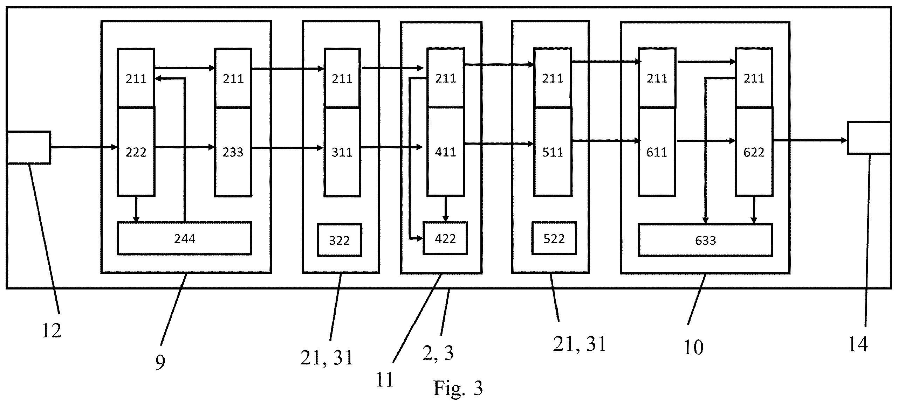

Nachfolgend wird eine optionale Ausgestaltung der Gateways 2, 3 und deren Betrieb weiter im Detail mit Bezug zu Figuren 3 bis 5 beschrieben, wobei dort beispielhaft nur eines der Gateways 2, 3 dargestellt ist und beschrieben wird. Die Beschreibung gilt jedoch für beide Gateways 2, 3 gleichermaßen.

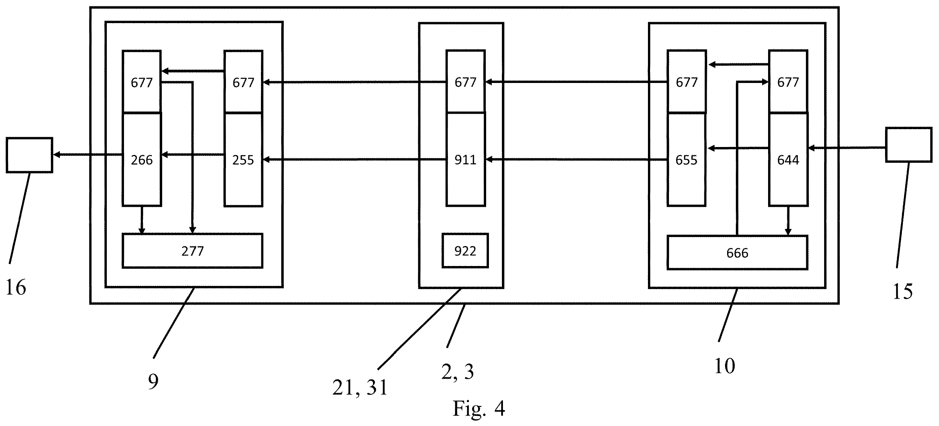

Wie oben bereits beschrieben, ist das Gateway 2, 3 ist sowohl zu dem HostProzessor 1 als auch zu den Sensoren 4 (wobei in den Figuren 3 und 4 beispielhaft nur einer der Sensoren dargestellt ist) so verbunden, dass eine bidirektionale (Daten) Kommunikation zwischen dem Host-Prozessor 1 und dem Sensor 4 über das Gateway 2, 3 möglich ist.

Das weiter im Detail in den Figuren 3 und 4 dargestellte Gateway 2, 3 umfasst einen als Master-Out-Slave-In-Pin (MOSI) ausgeführten ersten Pin 12, eine erste hier als SPI-Schnittstelle ausgeführte Schnittstelle 9, den vorliegend als RAM (engl. für Random-Access Memory) ausgeführten (Puffer-) Speicher 21, 31 (s. Figur 1) mit mehreren Speicherbereichen 311, 511, 911, eine Steuereinheit 11, eine zweite hier als DSI-Schnittstelle ausgeführte Schnittstelle 10, einen als DSI-Output-Pin ausgeführten zweiten Pin 14, einen als DSI-Input-Pin ausgeführten dritten Pin 15 und einen als Master-In-Slave-Out-Pin (MISO) ausgeführten vierten Pin 16.

Das Gateway 2, 3 ist über dessen SPI-Schnittstelle 9 zu dem Host-Prozessor 1 verbundenen und ausgestaltet ist, um mit dem Host-Prozessor 1 mittels eines ersten Kommunikationsstandards, hier dem SPI-Kommunikationsstandard, bidirektional zu kommunizieren.

Die SPI-Schnittstelle 9, welche zu dem MOSI-Pin 12 und zu dem MISO-Pin 16 verbunden ist, umfasst ein als MOSI-Register ausgeführtes Register 222, ein als SPI-CRC-Checker ausgeführtes Modul für eine Zyklische Redundanzprüfung 233, ein als ECC-Encoder ausgeführtes Modul 244 zum Erzeugen eines Error Correction Codes (ECC) 211 basierend auf in dem MOSI-Register 222 gespeicherten bzw. sich darin befindlichen Daten, die über den MOSI-Pin 12 von dem Host-Prozessor 1 empfangen wurden, ein als SPI-CRC-Generator ausgeführtes Modul zum Erzeugen eines Codes für eine Zyklische Redundanzprüfung 255 basierend auf von dem Speicherbereich 911 empfangenen Daten, ein als MISO-Register ausgeführtes Register 266, und ein als ECC-Decoder ausgeführtes Modul 277 zum Überprüfen eines ECCs 677.

Der zur SPI- und zur DSI-Schnittstelle verbundene Speicher 21, 31 dient zur Zwischenspeicherung von Daten, die über die SPI- und die DSI-Schnittstelle an dem Gateway 2, 3 empfangen werden, wobei der Speicher 21, 31 mittels einem Fehlerkorrekturverfahren abgesichert ist. Die Speicherbereiche 311, 511, 911 sind daher jeweils zu einem als RAM-ECC-Checker ausgeführten Modul 322, 522, 922 zur Überprüfung des ECCs 211 bzw. ECCs 677 verbunden.

Ein RAM-ECC-Checker kann dazu ausgestaltet sein, um den empfangenen ECC 211 bzw. 677 zu prüfen. Ein RAM-ECC-Checker 322, 522, 922 kann ausgestaltet sein, um über die am Speicher 21, 31 empfangenen Daten und über eine Speicheradresse, in der die Daten abgelegt werden sollen, einen ECC zu bilden und zusammen mit den Daten abzuspeichern. Ein RAM-ECC-Checker 322, 522, 922 kann ferner ausgestaltet sein, um den abgespeicherten ECC bei einem Lesezugriff auf die Daten zu prüfen und dann über die Daten wiederum einen ECC 211, 677 zu bilden, der sodann mit den Daten ausgegeben wird.

Die Steuereinheit 11 (auch als main control bezeichnet), die die über den Speicher zu der SPI- und der DSI-Schnittstelle 9, 10 verbunden ist, umfasst ein als Command-Control ausgeführtes Steuermodul 411 und ein als ECC-Decoder ausgeführtes Modul 422 zum Überprüfen des ECCs 211. Die Command-Control 411 kann dazu eingerichtet sein, um zu bestimmen, für welche Einheit (z.B. für welchen Sensor 4 oder für das Gateway 2, 3 selbst) von dem Host-Prozessor 1 empfangene Daten bestimmt sind und eine Weiterleitung der Daten an die bestimmte Einheit zu veranlassen.

Das Gateway 2, 3 ist über dessen DSI-Schnittstelle 10 zu dem Sensor 4 verbundenen und ausgestaltet ist, um mit dem Sensor 4 mittels eines zweiten Kommunikationsstandards, hier dem DSI-Kommunikationsstandard, bidirektional zu kommunizieren.

Die DSI-Schnittstelle 10, welche zu dem DSI-Output-Pin 14 und dem DSI-Input-Pin 15 verbunden ist, umfasst ein als DSI-CRC-Generator ausgeführtes Modul zum Erzeugen eines Codes für eine Zyklische Redundanzprüfung 611 basierend auf den von dem Speicherbereich 511 empfangenen Daten, ein als DSI-Tx-Register ausgeführtes Register 622, ein als ECC-Decoder ausgeführtes Modul 633 zum Überprüfen des ECCs 211, ein als DSI-Rx-Register ausgeführtes Register 644, ein als DSI-CRC-Checker ausgeführtes Modul für eine Zyklische Redundanzprüfung 655, und ein als ECC-Encoder ausgeführtes Modul 666 zum Erzeugen des ECCs 677 basierend auf in dem DSI-Rx-Register 644 gespeicherten bzw. sich darin befindlichen Daten, die über den DSI-Input-Pin 15 von dem Sensor 4 empfangen wurden.

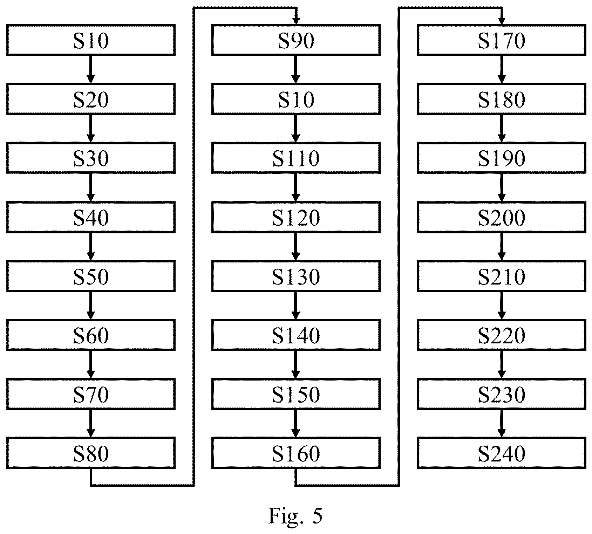

Damit ist das Gateway 2, 3 ausgestaltet, um gemäß dem nachfolgend auch mit Bezug zu Figur 5 beschriebenen Verfahren betrieben zu werden.

Die ersten vierzehn Schritte S10 - S140 die nachfolgend beschrieben werden korrespondieren zu der Darstellung des Gateways 2, 3 in Figur 3. Die Schritte S150 - S240 die anschließend beschrieben werden korrespondieren zu der Darstellung des Gateways 2, 3 in Figur 4. In beiden Darstellung ist also der für die jeweilige Kommunikationsrichtung relevante Teil des Gateways 2, 3 dargestellt (und der irrelevante weggelassen). Wie dem Fachmann bewusst ist, ist die in Figuren 3 und 4 gewählte Darstellungsform der Komponenten des Gateways 2, 3 insofern schematisch, als dass eine tatsächliche physische Anordnung der einzelnen Komponenten davon abweichen kann, solange das Gateway 2, 3 ausgestaltet ist, um das nachfolgend beschriebene Verfahren auszuführen. Als ein Beispiel sei die Darstellung des Speichers 21, 31 genannten, welcher als ein physischer Speicher (-baustein) ausgeführt sein kann, hier zu Erklärungszwecken aber nicht als eine zusammenhängende Einheit dargestellt ist. Als ein weiteres Beispiel seien die Speicherbereiche 311, 511, 911 genannt, welche in dem Speicher 21, 31 zwar als physisch getrennte Bereiche ausgeführt sein können, wohingegen dies aber nicht erforderlich ist und auch andere Lösungen denkbar sind.

In einem ersten Schritt S10 des Verfahrens sendet der Host-Prozessor 1 unter Nutzung des SPI-Kommunikationsstandards erste Daten über den MOSI-Pin 12 an die SPI-Schnittstelle 9, in der die erhaltenen ersten Daten in dem MOSI-Register 222 zwischengepuffert werden.

In einem zweiten Schritt S20 des Verfahrens erzeugt der ECC-Encoder 244 basierend auf dem in dem MOSI-Register 222 enthaltenen ersten Daten den ECC 211.

In einem dritten Schritt S30 des Verfahrens unterzieht der SPI-CRC-Checker 233 die in dem MOSI-Register 222 enthaltene erste Daten einer Zyklischen Redundanzprüfung basierend auf einem in den ersten Daten enthaltenen CRC, der optional von dem Host-Prozessor 1 erzeugt wurde.

In einem vierten Schritt S40 des Verfahrens gibt die SPI-Schnittstelle 9 die CRC geprüften ersten Daten zusammen mit dem ECC211 an den Speicherbereich 311 des RAMs 21, 31 weiter bzw. aus.

In einem fünften Schritt S50 des Verfahrens prüft der RAM-ECC-Checker 322 mittels des ECC 211, ob ein Fehler in den von der SPI-Schnittstelle 9 empfangenen Daten vorliegt und korrigiert diesen falls vorhanden und möglich.

Im Allgemeinen sei angemerkt, dass ein Fehler, der im Laufe des Verfahrens erkannt wird und nicht korrigiert werden kann, zu einem Abbruch des Verfahrens führen kann und/oder dazu, dass die fehlerhaften bzw. korrumpierten Daten erneut angefragt werden.

In einem sechsten Schritt S60 des Verfahrens werden die im Speicherbereich 311 zwischengepufferten und mittels des RAM-ECC-Checkers 322 geprüften Daten zusammen mit dem ECC 211 an die Command-Control 411 der Steuereinheit 11 ausgegeben.

In einem siebten Schritt S70 des Verfahrens überprüft der ECC-Decoder 422 der Steuereinheit 11 den empfangenen ECC 211 basierend auf den an der Command-Control 411 von dem Speicherbereich 311 empfangenen Daten, um zu prüfen, ob ein Fehler in den von dem Speicherbereich 311 empfangenen Daten vorliegt und korrigiert diesen falls vorhanden und möglich.

In einem achten Schritt S80 des Verfahrens gibt die Steuereinheit 11 die mittels des ECC-Decoders 422 geprüften Daten an den Speicherbereich 511 des Speichers 21, 31 aus.

In einem neunten Schritt S90 des Verfahrens prüft der RAM-ECC-Checker 522 mittels des ECC 211, ob ein Fehler in den von der Steuereinheit 11 empfangenen Daten vorliegt und korrigiert diesen falls vorhanden und möglich.

In einem zehnten Schritt S100 des Verfahrens werden die im Speicherbereich 511 zwischengepufferten und mittels des RAM-ECC-Checkers 522 geprüften Daten zusammen mit dem ECC 211 an den DSI-CRC-Generator 611 der DSI-Schnittstelle 10 ausgegeben.

In einem elften Schritt S110 des Verfahrens erzeugt der DSI-CRC-Generator 611 einen CRC basierend auf den von dem Speicherbereich 511 empfangenen Daten und gibt die Daten in einem zwölften Schritt S120 des Verfahrens zusammen mit dem erzeugten CRC und dem ECC 211 an das DSI-Tx-Register 622 aus.

In einem dreizehnten Schritt S130 des Verfahrens überprüft der ECC-Decoder 633 der DSI-Schnittstelle 10 den empfangenen ECC 211 basierend auf den in DSI-Tx-Register 622 zwischengepufferten Daten, ob ein Fehler in den von dem Speicherbereich 511 empfangenen Daten vorliegt und korrigiert diesen falls vorhanden und möglich.

In einem vierzehnten Schritt S140 des Verfahrens sendet die DSI-Schnittstelle 10 die geprüften Daten, die in dem DSI-Tx-Register 622 zwischengepuffert sind, zusammen mit dem in dem elften Schritt S110 erzeugten CRC über den DSI-Output-Pin 14 unter Nutzung des DSI-Kommunikationsstandards an den Sensor 4, wobei diese ausgesendeten Daten zu dem in dem ersten Schritt S10 an dem Gateway 2, 3 empfangenen ersten Daten korrespondieren.

Da der komplette Kommunikationsweg, wie oben mit Bezug zu den Schritten S10 - S140 beschrieben, vom Host-Prozessor 1 über das Gateway 2, 3 zum Sensor 4 (zwischen Host-Prozessor 1 und Gateway 2, 3 über CRC, innerhalb des Gateways 2, 3 über ECC und vom Gateway 2, 3 zum Sensor 4 wiederum über CRC) abgesichert ist, kann hier zumindest ASIL B erreicht werden.

Nachfolgend wird der Kommunikationsweg vom Sensor 4 über das Gateway 2, 3 zum Host-Prozessor 1 beschrieben. Die oben beschriebenen Schritte S10 - S140 lassen sich dabei als eigenständiges Verfahren betrachten und auch die untenstehenden Schritt S150 - S240 lassen sich als eigenständiges Verfahren betrachten, wobei die Verfahren miteinander kombiniert werden können und im Betrieb des Gateways 2, 3 nacheinander und/oder zumindest teilweise zeitgleich ausgeführt werden können.

In einem fünfzehnten Schritt S150 des Verfahrens sendet der Sensor 4 unter Nutzung des DSI-Kommunikationsstandards zweite Daten über den DSI-Input-Pin 15 an die DSI-Schnittstelle 10, in der die erhaltenen zweiten Daten in dem DSI-Rx-Register 644 zwischengepuffert wird.

In einem sechzehnten Schritt S160 des Verfahrens erzeugt der ECC-Encoder 666 basierend auf den in dem DSI-Rx-Register 644 enthaltenen zweiten Daten den ECC 677.

In einem siebzehnten Schritt S170 des Verfahrens unterzieht der DSI-CRC-Checker 655 die in dem DSI-Rx-Register 644 enthaltene zweiten Daten einer Zyklischen Redundanzprüfung basierend auf einem in den zweiten Daten enthaltenen CRC, der optional von dem Sensor 4 erzeugt wurde.

In einem achtzehnten Schritt S180 des Verfahrens gibt die DSI-Schnittstelle 10 die CRC geprüften zweiten Daten zusammen mit dem ECC 677 an den Speicherbereich 911 des RAMs 21, 31 weiter bzw. aus.

In einem neunzehnten Schritt S190 des Verfahrens prüft der RAM-ECC-Checker 922 mittels des ECC 677, ob ein Fehler in den von der DSI-Schnittstelle 10 empfangenen Daten vorliegt und korrigiert diesen falls vorhanden und möglich.

In einem zwanzigsten Schritt S200 des Verfahrens werden die im Speicherbereich 911 zwischengepufferten und mittels des RAM-ECC-Checkers 922 geprüften Daten zusammen mit dem ECC 677 an den SPI-CRC-Generator 255 der SPI-Schnittstellte 9 ausgegeben.

In einem einundzwanzigsten Schritt S210 des Verfahrens erzeugt der SPI-CRC-Generator 255 einen CRC basierend auf den von dem Speicherbereich 911 empfangenen Daten und gibt die Daten in einem zweiundzwanzigsten Schritt S220 des Verfahrens zusammen mit dem erzeugten CRC und dem ECC 677 an das SPI-MISO-Register 267 der SPI-Schnittstelle 9 aus.

In einem dreiundzwanzigsten Schritt S230 des Verfahrens überprüft der ECC-Decoder 277 der SPI-Schnittstelle 9 den empfangenen ECC 677 basierend auf den in dem SPI-MISO-Register 266 zwischengepufferten Daten, ob ein Fehler in den von dem Speicherbereich 911 empfangenen Daten vorliegt und korrigiert diesen falls vorhanden und möglich.

In einem vierundzwanzigsten Schritt S240 des Verfahrens sendet die SPI-Schnittstelle 9 die geprüften Daten, die in dem MISO-Register 266 zwischengepuffert sind, zusammen mit dem in dem einundzwanzigsten Schritt S210 erzeugten CRC über den MISO-Pin 16 unter Nutzung des SPI-Kommunikationsstandards an den Host-Prozessor 1, wobei diese ausgesendeten Daten zu dem in dem fünfzehnten Schritt S150 an dem Gateway 2, 3 empfangenen zweiten Daten korrespondieren.

Da auch hier der komplette Kommunikationsweg, wie oben mit Bezug zu den Schritten S150 - S240 beschrieben, vom Sensor 5 über das Gateway 2, 3 zum HostProzessor 1 (zwischen Host-Prozessor 1 und Gateway 2, 3 über CRC, innerhalb des Gateways 2, 3 über ECC und vom Sensor 4 zum Gateway 2, 3 wiederum über CRC) abgesichert ist, kann hier zumindest ASIL B erreicht werden.

Die oben beschriebenen Vorteile lassen sich also erreichen, da das Verfahren ein Absichern von mittels der ersten und der zweiten Schnittstelle empfangenen Daten mittels einem Fehlerkorrekturverfahren und/oder einem Fehlererkennungsverfahren an der ersten Schnittstelle 9, der zweiten Schnittstelle 10 und dem Speicher 21, 31 sowie der Steuereinheit 11 umfasst.

### Bezugszeichenliste

- 1: Host-Prozessor
- 2: erstes Gateway
- 21: (Puffer-) Speicher des ersten Gateways, optional RAM
- 3: Gateway
- 31: (Puffer-) Speicher des zweiten Gateways, optional RAM
- 4: Slaves, optional Sensor
- 5: Kanäle
- 6: erste Gruppe von Slaves
- 7: zweite Gruppe von Slaves
- 8: mögliche zusätzliche oder alternative Gruppe von Slaves
- 9: SPI-Schnittstelle
- 10: System zur Datenverarbeitung
- 11: Steuereinheit bzw. Main Control
- 12: Master-Out-Slave-In-Pin (MOSI)
- 14: DSI-Output-Pin
- 15: DSI-Input-Pin
- 16: Master-In-Slave-Out-Pin (MISO)
- 100: Kraftfahrzeug
- 211: ECC
- 222: MOSI-Register
- 233: SPI-CRC-Checker
- 244: ECC-Encoder
- 255: SPI-CRC-Generator
- 266: MISO-Register
- 277: ECC-Decoder
- 311: erster Speicherbereich
- 322: RAM-ECC-Checker
- 411: Steuermodul bzw. Command Control
- 422: ECC-Decoder
- 511: zweiter Speicherbereich
- 522: RAM-ECC-Checker
- 10: DSI-Schnittstelle
- 611: DSI-CRC-Generator
- 622: DSI-Tx-Register
- 633: ECC-Encoder
- 644: DSI-Rx-Register
- 655: DSI-CRC-Checker
- 665: ECC-Encoder
- 677: ECC
- 911: dritter Speicherbereich
- 922: RAM-ECC-Checker

- S1 - S7: Verfahrensschritte des ersten Verfahrens
- S10 - S240: Verfahrensschritte des zweiten Verfahrens

## Patentansprüche

1. Gateway (2, 3) zur Verbindung mit einem Host-Prozessor (1) und mehreren Slaves (4), wobei das Gateway (2, 3) und die Slaves (4) in einer P2P-Topologie organisiert sind, sodass das Gateway (2, 3) für jeden der Slaves (4) einen unabhängigen Kanal (5) aufweist, wobei das Gateway (2, 3) ausgestaltet ist, um:
- mehrere Steuersignale, umfassend jeweils zumindest ein Steuersignal für jeweils einen vorbestimmten Slave (4) der mehreren Slaves (4), von dem Host-Prozessor (1) zu empfangen,
- zu bestimmen, ob sich die Slaves (4), für die das zumindest eine Steuersignal empfangen wurde, in einem einsatzfähigen Zustand befinden, und
- die von dem Host-Prozessor (1) empfangenen Steuersignale erst dann zeitgleich an die Slaves (4), für die das zumindest eine Steuersignal empfangen wurde, auszugeben, wenn sich alle Slaves (4), für die das zumindest eine Steuersignal empfangen wurde, in dem einsatzfähigen Zustand befinden.

2. Gateway (2, 3) nach Anspruch 1, wobei das Gateway (2, 3) ausgestaltet ist, um basierend auf einer von dem jeweiligen Slave (4) empfangenen Information zu bestimmen, ob sich der jeweilige Slave (4) in dem einsatzfähigen Zustand befindet.

3. Gateway (2, 3) nach Anspruch 1 oder 2, wobei das Gateway (2, 3) ausgestaltet ist, um basierend auf einer von dem Host-Prozessor (1) empfangenen Information zu bestimmen für welchen der Slaves (4) der mehreren Slaves (4) ein jeweiliges vom Host-Prozessor (1) empfangenes Steuersignal der mehreren Steuersignale bestimmt ist.

4. Gateway (2, 3) nach einem der Ansprüche 1 bis 3, wobei das Gateway (2, 3) einen Speicher (21, 31) zum Zwischenspeichern der vom Host-Prozessor (1) empfangenen Steuersignale aufweist.

5. Gateway (2, 3) nach einem der Ansprüche 1 bis 4, wobei das Gateway (2, 3) ausgestaltet ist, um:
- ein weiteres Steuersignal von dem Host-Prozessor (1) zu empfangen, und
- die von dem Host-Prozessor (1) empfangenen Steuersignale erst dann zeitgleich an die Slaves (4), für die das Steuersignal empfangen wurde, auszugeben, wenn sich alle Slaves (4), für die das Steuersignal empfangen wurde, in dem einsatzfähigen Zustand befinden und das weitere Steuersignal an dem Gateway (2, 3) von dem Host-Prozessor (1) empfangen wurde.

6. Gateway (2, 3) nach einem der Ansprüche 1 bis 5, wobei das Gateway (2, 3) umfasst:
- eine erste Schnittstelle (9) zur Kommunikation mit dem HostProzessor (1) mittels eines ersten Kommunikationsstandards,
- eine zweite Schnittstelle (10) zur Kommunikation mit den Slaves (4) mittels eines zweiten Kommunikationsstandards, und
- einen zur ersten und/oder zur zweiten Schnittstelle (9, 10) verbundenen Speicher (21, 31) zur Zwischenspeicherung von Daten, die über die erste und/oder die zweite Schnittstelle (9, 10) an dem Gateway (1) empfangen werden,
- wobei der Speicher (21, 31) mittels einem Fehlererkennungsverfahren und/oder einem Fehlerkorrekturverfahren abgesichert ist.

7. Gateway (2, 3) nach Anspruch 6, wobei
- die erste Schnittstelle (9) ausgestaltet ist, um einen ersten Error Correction Code (211) basierend auf an der ersten Schnittstelle (9) empfangenen Daten zu erzeugen und den erzeugten ersten Error Correction Code (211) zusammen mit den an der ersten Schnittstelle (9) empfangenen Daten zu dem Speicher (21, 31) auszugeben, und/oder
- die zweite Schnittstelle (10) ausgestaltet ist, um basierend auf an der zweiten Schnittstelle (10) empfangenen Daten einen zweiten Error Correction Code (677) zu erzeugen und den erzeugten zweiten Error Correction Code (677) zusammen mit den an der zweiten Schnittstelle (10) empfangenen Daten zu dem Speicher (21, 31) auszugeben.

8. Gateway (2 ,3) nach Anspruch 7, wobei
- der Speicher (21, 31) ausgestaltet ist, um mittels dem am Speicher (21, 31) empfangenen ersten Error Correction Code (211) einen Fehler in den von der ersten Schnittstelle (9) empfangenen Daten zu erkennen, und optional zu korrigieren, und/oder
- der Speicher (21, 31) ausgestaltet ist, um mittels dem am Speicher (21, 31) empfangenen zweiten Error Correction Code (677) einen Fehler in den von der zweiten Schnittstelle (10) empfangenen Daten zu erkennen, und optional zu korrigieren.

9. Gateway (1) nach Anspruch 7 oder 8, wobei
- der Speicher (21, 31) ausgestaltet ist, um den empfangenen ersten Error Correction Code (211) zusammen mit den von der ersten Schnittstelle (9) empfangenen Daten an die zweite Schnittstelle (10) auszugeben und die zweite Schnittstelle (10) ausgestaltet ist, um mittels dem an der zweiten Schnittstelle (6) empfangenen ersten Error Correction Code (211) einen Fehler in den an der ersten Schnittstelle (9) von dem Speicher (21, 31) empfangenen Daten zu erkennen, und optional zu korrigieren, und/oder
- der Speicher (21, 31) ausgestaltet ist, um den empfangenen zweiten Error Correction Code (677) zusammen mit den von der zweiten Schnittstelle (10) empfangenen Daten an die erste Schnittstelle (9) auszugeben und die erste Schnittstelle (9) ausgestaltet ist, um mittels dem an der ersten Schnittstelle (9) empfangenen zweiten Error Correction Code (677) einen Fehler in den an der ersten Schnittstelle (9) von dem Speicher (21, 31) empfangenen Daten zu erkennen, und optional zu korrigieren.

10. Gateway (1) nach Anspruch 9, wobei
- das Gateway (2, 3) eine Steuereinheit (11) aufweist, die über den Speicher (21, 31) zu der ersten und/oder der zweiten Schnittstelle (9, 10) verbunden ist,
- der Speicher (21, 31) ausgestaltet ist, um den empfangenen ersten Error Correction Code (211) zusammen mit den von der ersten Schnittstelle (9) empfangenen Daten über die Steuereinheit (11) an die zweite Schnittstelle (10) auszugeben, und
- die Steuereinheit (11) ausgestaltet ist, um mittels dem an der Steuereinheit (11) empfangenen ersten Error Correction Code (211) einen Fehler in den an der Steuereinheit (11) von dem Speicher (21, 31) empfangenen Daten zu erkennen, und optional zu korrigieren

11. Gateway (1) nach einem der Ansprüche 1 bis 10, wobei
- die erste Schnittstelle (9) ausgestaltet ist, um die an der ersten Schnittstelle (9) empfangenen Daten mittels einer zyklischen Redundanzprüfung zu prüfen, und/oder
- die zweite Schnittstelle (10) ausgestaltet ist, um die an der zweiten Schnittstelle (10) empfangenen Daten mittels einer zyklischen Redundanzprüfung zu prüfen.

12. System zur Datenverarbeitung (10), wobei das System umfasst:
- das Gateway (2, 3) nach einem der Ansprüche 1 bis 11,
- einen zu dem Gateway (2, 3) verbundenen Host-Prozessor (1), der ausgestaltet ist, um die mehreren Steuersignale, umfassend jeweils das zumindest eine Steuersignal für jeweils einen vorbestimmten Slave (4) der mehreren Slaves (4), an das Gateway (2, 3) auszugeben, und
- mehrere zu dem Gateway (2, 3) verbundene Slaves (4), wobei das Gateway (2, 3) und die Slaves (4) in einer P2P-Topologie organisiert sind, sodass das Gateway (2, 3) für jeden der Slaves (4) einen unabhängigen Kanal (5) aufweist.

13. System zur Datenverarbeitung (10) nach Anspruch 12 und soweit auf Anspruch 2 rückbezogen, wobei die Slaves (4) jeweils ausgestaltet sind, um die Information an das Gateway (2, 3) auszugeben, basierend auf welcher das Gateway (2, 3) bestimmen kann, ob sich der jeweilige Slave (4) in dem einsatzfähigen Zustand befindet.

14. System zur Datenverarbeitung (10) nach Anspruch 12 oder 13 und soweit auf Anspruch 3 rückbezogen, wobei der Host-Prozessor (1) ausgestaltet ist, um die Information an das Gateway (2, 3) auszugeben, basierend auf welcher das Gateway (2, 3) bestimmen kann für welchen der Slaves (4) der mehreren Slaves (4) ein jeweiliges vom Host-Prozessor (1) empfangenes Steuersignal der mehreren Steuersignale bestimmt ist.

15. System zur Datenverarbeitung (10) nach einem der Ansprüche 12 bis 14 und soweit auf Anspruch 5 rückbezogen, wobei der Host-Prozessor (1) ausgestaltet ist, um das weitere Steuersignal an das Gateway (2, 3) auszugeben.

16. Kraftfahrzeug (100), wobei das Kraftfahrzeug (100) das Gateway (2, 3) nach einem der Ansprüche 1 bis 11 oder das System zur Datenverarbeitung (10) nach einem der Ansprüche 12 bis 15 umfasst.

17. Verfahren zum Betreiben eines Gateways (2, 3) nach einem der Ansprüche 1 bis 11, wobei das Verfahren umfasst:
- Empfangen mehrerer Steuersignale, umfassend jeweils zumindest ein Steuersignal für jeweils einen vorbestimmten Slave der mehreren Slaves (4), von dem Host-Prozessor (1) an dem Gateway (2, 3),
- Bestimmen, ob sich die Slaves (4), für die das zumindest eine Steuersignal empfangen wurde, in einem einsatzfähigen Zustand befinden, und
- zeitgleiches Ausgeben der von dem Host-Prozessor (1) empfangenen Steuersignale an die Slaves (4), für die das zumindest eine Steuersignal empfangen wurde, erst dann, wenn sich alle Slaves (4), für die das zumindest eine Steuersignal empfangen wurde, in dem einsatzfähigen Zustand befinden.

18. Verfahren nach Anspruch 17, soweit auf einen der Ansprüche 6 bis 11 rückbezogen, wobei das Verfahren ein Absichern von mittels der ersten und/oder der zweiten Schnittstelle (9, 10) empfangenen Daten mittels einem Fehlererkennungsverfahren und/oder einem Fehlerkorrekturverfahren an der ersten Schnittstelle (9), der zweiten Schnittstelle (10) und/oder dem Speicher (21, 31) umfasst.

19. Computerprogramm, wobei das Computerprogramm Befehle umfasst, die bei der Ausführung des Programms einen Computer diesen veranlassen, das Verfahren nach Anspruch 17 oder 18 auszuführen.

20. Computerlesbares Medium, wobei das computerlesbare Medium ein Computerprogramm nach Anspruch 19 umfasst.

## Claims

1. A gateway (2, 3) for connecting to a host processor (1) and a plurality of slaves (4), wherein the gateway (2, 3) and the slaves (4) are organized in a P2P topology such that the gateway (2, 3) has an independent channel (5) for each of the slaves (4), wherein the gateway (2, 3) is designed to:
- receive, from the host processor (1), a plurality of control signals, each comprising at least one control signal for a respective predetermined slave (4) of the plurality of slaves (4),
- determine whether the slaves (4) for which the at least one control signal was received are in an operational state, and
- synchronously output the control signals received from the host processor (1) to the slaves (4) for which the at least one control signal was received only when all slaves (4) for which the at least one control signal was received are in the operational state.

2. The gateway (2, 3) of claim 1, wherein the gateway (2, 3) is designed to determine whether the respective slave (4) is in the operational state, based on information received from the respective slave (4).

3. The gateway (2, 3) of claim 1 or 2, wherein the gateway (2, 3) is designed to determine, based on information received from the host processor (1), for which of the slaves (4) of the plurality of slaves (4) a respective control signal of the plurality of control signals received from the host processor (1) is intended.

4. The gateway (2, 3) of any one of claims 1 to 3, wherein the gateway (2, 3) has a memory (21, 31) for caching the control signals received from the host processor (1).

5. The gateway (2, 3) of any one of claims 1 to 4, wherein the gateway (2, 3) is designed to:
- receive another control signal from the host processor (1), and
- synchronously output the control signals received from the host processor (1) to the slaves (4) for which the control signal was received only when all slaves (4) for which the control signal was received are in the operational state and the other control signal was received at the gateway (2, 3) from the host processor (1).

6. The gateway (2, 3) of any one of claims 1 to 5, wherein the gateway (2, 3) comprises:
- a first interface (9) for communication with the host processor (1) by means of a first communication standard,
- a second interface (10) for communication with the slaves (4) by means of a second communication standard, and
- a memory (21, 31) connected to the first and/or second interface (9, 10) for caching data received at the gateway (1) via the first and/or second interface (9, 10),
- wherein the memory (21, 31) is protected by means of an error detection method and/or an error correction method.

7. The gateway (2, 3) of claim 6, wherein
- the first interface (9) is designed to generate a first error correction code (211) based on data received at the first interface (9) and to output the generated first error correction code (211) together with the data received at the first interface (9) to the memory (21, 31), and/or
- the second interface (10) is designed to generate a second error correction code (677) based on data received at the second interface (10) and to output the generated second error correction code (677) together with the data received at the second interface (10) to the memory (21, 31).

8. The gateway (2, 3) of claim 7, wherein
- the memory (21, 31) is designed to detect and optionally correct an error in the data received from the first interface (9) by means of the first error correction code (211) received at the memory (21, 31), and/or
- the memory (21, 31) is designed to detect and optionally correct an error in the data received from the second interface (10) by means of the second error correction code (677) received at the memory (21, 31).

9. The gateway (1) of claim 7 or 8, wherein
- the memory (21, 31) is designed to output the first error correction code (211) received together with data received from the first interface (9) to the second interface (10), and the second interface (10) is designed to detect and optionally correct an error in the data received at the first interface (9) from the memory (21, 31) by means of the first error correction code (211) received at the second interface (6), and/or
- the memory (21, 31) is designed to output the second error correction code (677) received together with data received from the second interface (10) to the first interface (9), and the first interface (9) is designed to detect and optionally correct an error in the data received at the first interface (9) from the memory (21, 31) by means of the second error correction code (677) received at the first interface (9).

10. The gateway (1) of claim 9, wherein
- the gateway (2, 3) has a control unit (11) which is connected to the first and/or second interface (9, 10) via the memory (21, 31),
- the memory (21, 31) is designed to output the first error correction code (211) received together with the data received from the first interface (9) via the control unit (11) to the second interface (10), and
- the control unit (11) is designed to detect and optionally correct an error in the data received at the control unit (11) from the memory (21, 31) by means of the first error correction code (211) received at the control unit (11).

11. The gateway (1) of any one of claims 1 to 10, wherein
- the first interface (9) is designed to check the data received at the first interface (9) by means of a cyclic redundancy check, and/or
- the second interface (10) is designed to check the data received at the second interface (10) by means of a cyclic redundancy check.

12. A data processing system (10), the system comprising:
- the gateway (2, 3) of any one of claims 1 to 11,
- a host processor (1) connected to the gateway (2, 3) and designed to output the plurality of control signals, each comprising the at least one control signal for a respective predetermined slave (4) of the plurality of slaves (4), to the gateway (2, 3), and
- a plurality of slaves (4) connected to the gateway (2, 3), wherein the gateway (2, 3) and the slaves (4) are organized in a P2P topology such that the gateway (2, 3) has an independent channel (5) for each of the slaves (4).

13. The data processing system (10) of claim 12 and as far as dependent on claim 2, wherein the slaves (4) are each designed to output the information to the gateway (2, 3) based on which the gateway (2, 3) can determine whether the respective slave (4) is in the operational state.

14. The data processing system (10) of claim 12 or 13 and as far as dependent on claim 3, wherein the host processor (1) is designed to output the information to the gateway (2, 3) based on which the gateway (2, 3) can determine for which of the slaves (4) of the plurality of slaves (4) a respective control signal of the plurality of control signals received from the host processor (1) is intended.

15. The data processing system (10) of any one of claims 12 to 14 and as far as dependent on claim 5, wherein the host processor (1) is designed to output the other control signal to the gateway (2, 3).

16. A motor vehicle (100), wherein the motor vehicle (100) comprises the gateway (2, 3) of any one of claims 1 to 11 or the data processing system (10) of any one of claims 12 to 15.

17. A method for operating a gateway (2, 3) of any one of claims 1 to 11, the method comprising:
- receiving, at the gateway (2, 3) from the host processor (1), a plurality of control signals, each comprising at least one control signal for a respective predetermined slave of the plurality of slaves (4),
- determining whether the slaves (4) for which the at least one control signal was received are in an operational state, and
- synchronously outputting the control signals received from the host processor (1) to the slaves (4) for which the at least one control signal was received only when all slaves (4) for which the at least one control signal was received are in the operational state.

18. The method of claim 17, as far as dependent on any one of claims 6 to 11, wherein the method comprises securing data received by means of the first and/or the second interface (9, 10) by means of an error detection method and/or an error correction method at the first interface (9), the second interface (10), and/or the memory (21, 31).

19. A computer program, wherein the computer program comprises instructions which, when the program is executed, cause a computer to carry out the method of claim 17 or 18.

20. A computer-readable medium, wherein the computer-readable medium comprises a computer program of claim 19.

## Revendications

1. Passerelle (2, 3) pour connecter un processeur hôte (1) et plusieurs esclaves (4), dans laquelle la passerelle (2, 3) et les esclaves (4) sont organisés selon une topologie P2P de sorte que la passerelle (2, 3) dispose d'un canal (5) indépendant pour chacun des esclaves (4), dans lequel la passerelle (2, 3) est conçue pour :
- recevoir une pluralité de signaux de commande, chacun comprenant au moins un signal de commande pour un esclave prédéterminé respectif (4) de la pluralité d'esclaves (4), en provenance du processeur hôte (1),
- déterminer si les esclaves (4) pour lesquels l'au moins un signal de commande a été reçu se trouvent dans un état opérationnel, et
- délivrer les signaux de commande reçus du processeur hôte (1) aux esclaves (4) pour lesquels l'au moins un signal de commande a été reçu uniquement au même moment où tous les esclaves (4) pour lesquels l'au moins un signal de commande a été reçu se trouvent dans l'état opérationnel.

2. Passerelle (2, 3) selon la revendication 1, dans laquelle la passerelle (2, 3) est configurée pour déterminer, sur la base des informations reçues de l'esclave respectif (4), si l'esclave respectif (4) est dans l'état opérationnel.

3. Passerelle (2, 3) selon la revendication 1 ou 2, dans laquelle la passerelle (2, 3) est conçue pour déterminer, sur la base d'informations reçues du processeur hôte (1), pour lequel des esclaves (4) de la pluralité d'esclaves (4) un signal de commande respectif de la pluralité de signaux de commande reçus du processeur hôte (1) est déterminé.

4. Passerelle (2, 3) selon l'une des revendications 1 à 3, dans laquelle la passerelle (2, 3) présente une mémoire (21, 31) pour stocker temporairement les signaux de commande reçus du processeur hôte (1).

5. Passerelle (2, 3) selon l'une des revendications 1 à 4, dans laquelle la passerelle (2, 3) est conçue pour :
- recevoir un autre signal de commande du processeur hôte (1), et
- délivrer les signaux de commande reçus du processeur hôte (1) aux esclaves (4) pour lesquels le signal de commande a été reçu uniquement au même moment où tous les esclaves (4) pour lesquels le signal de commande a été reçu se trouvent dans l'état opérationnel et l'autre signal de commande a été reçu par le processeur hôte (1) au niveau de la passerelle (2, 3).

6. Passerelle (2, 3) selon l'une des revendications 1 à 5, dans laquelle la passerelle (2, 3) comprend :
- une première interface (9) de communication avec le processeur hôte (1) au moyen d'une première norme de communication,
- une seconde interface (10) de communication avec les esclaves (4) au moyen d'une seconde norme de communication, et
- une mémoire (21, 31) connectée à la première et/ou à la seconde interface (9, 10) pour stocker temporairement les données reçues à la passerelle (1) par l'intermédiaire de la première et/ou de la seconde interface (9, 10),
- dans lequel la mémoire (21, 31) est protégée au moyen d'un procédé de détection d'erreur et/ou d'un procédé de correction d'erreur.

7. Passerelle (2, 3) selon la revendication 6, dans laquelle
- la première interface (9) est conçue pour générer un premier code de correction d'erreur (211) sur la base des données reçues à la première interface (9) et pour délivrer à la mémoire (21, 31) le premier code de correction d'erreur généré (211), conjointement avec les données reçues au niveau de la première interface (9), et/ou
- la seconde interface (10) est conçue pour générer un second code de correction d'erreur (677) sur la base des données reçues au niveau de la seconde interface (10) et pour délivrer à la mémoire (21, 31) le second code de correction d'erreur généré (677), conjointement avec les données reçues au niveau de la seconde interface (10).

8. Passerelle (2, 3) selon la revendication 7, dans laquelle
- la mémoire (21, 31) est conçue pour détecter une erreur dans les données reçues en provenance de la première interface (9) au moyen du premier code de correction d'erreur (211) reçu dans la mémoire (21, 31) et éventuellement pour la corriger, et/ou
- la mémoire (21, 31) est conçue pour détecter une erreur dans les données reçues en provenance de la seconde interface (10) au moyen du second code de correction d'erreur (677) reçu au niveau de la mémoire (21, 31) et éventuellement pour la corriger.

9. Passerelle (1) selon la revendication 7 ou 8, dans laquelle
- la mémoire (21, 31) est conçue pour délivrer le premier code de correction d'erreur reçu (211), conjointement avec les données reçues au niveau de la seconde interface (10) en provenance de la première interface (9), et la seconde interface (10) est conçue pour détecter et éventuellement corriger une erreur dans les données reçues au niveau de la première interface (9) en provenance de la mémoire (21, 31) au moyen du premier code de correction d'erreur (211) reçu au niveau de la seconde interface (10), et/ou
- la mémoire (21, 31) est conçue pour délivrer le second code de correction d'erreur reçu (677) conjointement avec les données reçues au niveau de la première interface (9) en provenance de la seconde interface (10) et la première interface (9) est conçue pour détecter et éventuellement corriger une erreur dans les données reçues au niveau de la première interface (9) en provenance de la mémoire (21, 31) au moyen du second code de correction d'erreur (677) reçu au niveau de la première interface (9).

10. Passerelle (1) selon la revendication 9, dans laquelle
- la passerelle (2, 3) présente une unité de commande (11) qui est connectée à la première et/ou à la seconde interface (9, 10) par l'intermédiaire de la mémoire (21, 31),
- la mémoire (21, 31) est conçue pour délivrer le premier code de correction d'erreur reçu (211), conjointement avec les données reçues au niveau de la première interface (9) en provenance de la seconde interface (10) par l'intermédiaire de l'unité de commande (11), et
- l'unité de commande (11) est conçue pour détecter une erreur dans les données reçues au niveau de l'unité de commande (11) en provenance de la mémoire (21, 31) au moyen du premier code de correction d'erreur (211) reçu au niveau de l'unité de commande (11), et éventuellement pour la corriger.

11. Passerelle (1) selon l'une des revendications 1 à 10, dans laquelle
- la première interface (9) est conçue pour vérifier les données reçues au niveau de la première interface (9) au moyen d'un contrôle de redondance cyclique, et/ou
- la seconde interface (10) est conçue pour vérifier les données reçues au niveau de la seconde interface (10) au moyen d'un contrôle de redondance cyclique.

12. Système de traitement de données (10), dans lequel le système comprend :
- la passerelle (2, 3) selon l'une des revendications 1 à 11,
- un processeur hôte (1) connecté à la passerelle (2, 3) et configuré pour délivrer à la passerelle (2, 3) la pluralité de signaux de commande, chacun comprenant l'au moins un signal de commande pour un esclave prédéterminé respectif (4) de la pluralité d'esclaves (4), et
- plusieurs esclaves (4) connectés à la passerelle (2, 3), dans lequel la passerelle (2, 3) et les esclaves (4) sont organisés selon une topologie P2P de sorte que la passerelle (2, 3) dispose d'un canal (5) indépendant pour chacun des esclaves (4).

13. Système de traitement de données (10) selon la revendication 12 et dans la mesure où elle dépend de la revendication 2, dans lequel les esclaves (4) sont chacun configurés pour délivrer les informations à la passerelle (2, 3) sur la base desquelles la passerelle (2, 3) peut déterminer si l'esclave respectif (4) se trouve dans l'état opérationnel.

14. Système de traitement de données (10) selon la revendication 12 ou 13 et dans la mesure où elle dépend de la revendication 3, et dans lequel le processeur hôte (1) est conçu pour délivrer, au niveau de la passerelle, les informations (2, 3), sur la base desquelles la passerelle (2, 3) peut déterminer pour lequel des esclaves (4) de la pluralité d'esclaves (4) un signal de commande reçu respectivement du processeur hôte (1) de la pluralité des signaux de commande est déterminé.

15. Système de traitement de données (10) selon l'une des revendications 12 à 14 et dans la mesure où elle dépend de la revendication 5, dans lequel le processeur hôte (1) est conçu pour délivrer le signal de commande supplémentaire à la passerelle (2, 3).

16. Véhicule automobile (100), dans lequel le véhicule automobile (100) comprend la passerelle (2, 3) selon l'une des revendications 1 à 11 ou le système de traitement de données (10) selon l'une des revendications 12 à 15.

17. Procédé de fonctionnement d'une passerelle (2, 3) selon l'une des revendications 1 à 11, dans lequel le procédé comprend :
- la réception d'une pluralité de signaux de commande au niveau de la passerelle (2, 3) en provenance du processeur hôte (1), chacun comprenant au moins un signal de commande pour un esclave prédéterminé respectif de la pluralité d'esclaves (4),
- le fait de déterminer si les esclaves (4) pour lesquels l'au moins un signal de commande a été reçu se trouvent dans un état opérationnel, et
- la délivrance simultanée des signaux de commande reçus du processeur hôte (1) aux esclaves (4) pour lesquels l'au moins un signal de commande a été reçu uniquement au même moment où tous les esclaves (4) pour lesquels l'au moins un signal de commande a été reçu se trouvent dans l'état opérationnel.

18. Procédé selon la revendication 17, dans la mesure où elle dépend de l'une des revendications 6 à 11, dans lequel le procédé comprend la sécurisation des données reçues au moyen de la première et/ou de la seconde interface (9, 10) au moyen d'un procédé de détection d'erreur et/ou d'un procédé de correction d'erreur au niveau de la première interface (9), de la seconde interface (10) et/ou de la mémoire (21, 31).

19. Programme informatique, dans lequel le programme informatique comprend des instructions qui, lorsque le programme est exécuté, amènent un ordinateur à mettre en œuvre le procédé selon la revendication 17 ou 18.

20. Support lisible par ordinateur, dans lequel le support lisible par ordinateur comprend un programme informatique selon la revendication 19.
